# EUROPÄISCHE PATENTANMELDUNG

(11) **EP 1 783 668 A2**
(43) Veröffentlichungstag der Anmeldung: **09.05.2007**
(21) Anmeldenummer: 06019370.3
(22) Anmeldetag: 15.09.2006
(51) Int. Cl.: G06K 19/077

(54) **Transpondereinheit**

(30) Priorität: 29.09.2005 DE 202005015382 U; 02.05.2006 DE 202006006954 U
(71) Anmelder: Harting Mitronics AG, 2500 Biel 6 (CH)
(72) Erfinder: Hehlgans, Jörg, 31199 Diekholzen (DE); Baraldi, Luca, Dr., 3052 Zollikofen (CH); Eggimann, Reto, 2555 Brügg (CH); Patry, Christian, 3210 Kerzens (CH)
(74) Vertreter: Sties, Jochen

(57) **Zusammenfassung**

Für eine kostengünstige Herstellung eines für die Identifikation von Waren vorgesehenen Transponders in einem RFID-System wird ein zweischaliges Gehäuse mit einem Gehäuseoberteil (3) und einem Gehäuseunterteil vorgeschlagen, wobei das Gehäuseunterteil mit einer Massefläche versehen ist, oberhalb derer eine davon beabstandete Antenne (5) mit einem Transponder-IC (7) angeordnet ist.

## Beschreibung

Die Erfindung betrifft eine Transpondereinheit in einem hermetisch abgeschlossenen Gehäuse, bestehend aus einem Gehäuseunterteil und einem Gehäuseoberteil.

### Stand der Technik

Die Entwicklung von Radio Frequency Identification Systemen (RFID) hat in den letzten Jahren stark zugenommen. RFID Systeme werden z. B. in Warenhäusern zur Identifikation von Waren, in der Logistik, in Kontroll- oder in der Automatisierungstechnik eingesetzt. Dem industriellen Umfeld entsprechend werden hohe Anforderungen an Zuverlässigkeit und einfache Handhabbarkeit gestellt. Die Bauformen sind sehr vielfältig. Sie werden in Form von bedruckten Labeln, ISO - Karten, Schlüsselanhängern usw. hergestellt.

RFID Systeme bestehen aus einem Sendemodul (Transponder) mit gespeicherten Daten, wobei der Transponder aus einer oder mehreren integrierten Schaltungen (Transponder-ICs), einer Antenne und weiteren passiven Komponenten gebildet ist.
Weiterhin ist für das System ein Empfängermodul oder ein Lesegerät zur Datenaufnahme erforderlich.
Der Transponder wird auf die zu überwachenden Waren angebracht.
Dabei hängt der Abstand zwischen Transponder und Lesegerät (Lesedistanz) vom Übertragungssystem und der verwendeten Frequenz ab.
In Europa können RFID Systeme im so genannten SRD Band zwischen 868 und 870 MHz (neu auch inzwischen 865 und 868 MHz) betrieben werden sowie weltweit zwischen 2400 und 2483,5 MHz.

In passiven Systemen wird der Transponder über ein magnetisches oder elektro-magnetisches Feld mit Energie versorgt. Aufgrund der externen Energieversorgung kann der Aufbau sehr einfach und kostengünstig gestaltet werden.

Der Anwendungsbereich eines Transponders hängt im wesentlichen von der Lesedistanz und den Eigenschaften des Gehäuses ab. Um einen möglichst großen Einsatzbereich zu ermöglichen, soll das Gehäuse möglichst klein und unempfindlich gegen Umwelteinflüsse sein.
Darüber hinaus muss eine uneingeschränkte Funktion auf leitendem, absorbierendem oder reflektierendem Untergrund gewährleistet sein.

Es sind eine Vielzahl von Transpondern bekannt. Die Form des Transponders wird wesentlich von der Antenne bestimmt. Die Antennen sind gestanzt, geätzt oder durch konventionelle Leiterplattentechnologie hergestellt und in entsprechende Gehäuse montiert. Für die weitere Verbindung der Antenne zum Transponder-IC stehen verschiedene Technologien zur Verfügung: Transponder-ICs mit Leadframe können durch Löten, Mikroschweißen oder Crimpen kontaktiert werden. Transponder-ICs ohne eigenes Gehäuse können durch Kleben oder Löten direkt verbunden werden.

Der Herstellungsprozess eines Transponders kann in folgende Arbeitsschritte unterteilt werden: Montage und Justage der Antenne und des Transponder-ICs in das Gehäuse. Kontaktierung des Transponder-ICs an die Antenne und an die Massefläche. Einbringen eines Dielektrikums und Schließen des Gehäuses durch Schrauben, Verkleben oder Verschweißen.

Nachteilig wirkt sich dabei aus, dass Montage- und Justagefehler sich auf die Funktionstüchtigkeit und Effizienz des Transponders auswirken. Weiterhin ist die Stabilität und Formtreue bei starken Temperaturänderungen und äußeren mechanischem Stress bei unterschiedlichen zusammengefügten Materialien nicht gewährleistet, da Komponenten mit verschiedenen Eigenschaften miteinander verbunden werden. Darüber hinaus sind Anpassungen an geänderte äußere Bedingungen nur durch Änderungen an den Bauteilen möglich, die in vielen Fällen eine neue Konstruktion erforderlich machen.

### Aufgabenstellung

Der Erfindung liegt daher die Aufgabe zugrunde, einen Transponder der eingangs genannten Art dahingehend auszubilden, dass durch die Herstellung des Leiterkörpers, der Antenne und der Massefläche aus einem Stück Montage- und Justagefehler ausgeschlossen werden.

Die Aufgabe wird dadurch gelöst, dass das Gehäuseunterteil mit einer Massefläche versehen ist, und dass beabstandet von der Massefläche eine Antenne angeordnet ist.

Die mit der Erfindung erzielten Vorteile bestehen insbesondere darin, dass eine hohe Präzision und Reproduzierbarkeit bei der Herstellung des gesamten Gehäuses durch eine spezielle Formgebungstechnik gewährleistet ist. Dabei kann die Antenne als einteiliger an die Gehäuseunterseite angeformter, beabstandeter Steg ausgebildet sein, auf dem eine streifenförmige Antenne aufgebracht ist.
Weiterhin kann die Antenne als metallisierter Streifen in der Gehäuseoberseite integriert sein.
Wobei vorteilhafterweise jeweils keine Montage- und Justagearbeiten der Antenne notwendig sind.
Die leitenden metallisierten Antennenstreifen im Oberteil und die gitternetzartige oder auch flächige Massefläche im Unterteil werden durch eine selektive Metallisierung erzeugt.
Dabei kann die Massefläche innerhalb oder außerhalb der Gehäuseunterseite aufgebracht sein kann.
Weiterhin kann durch das Einbringen eines Dielektrikums in den Raum zwischen der Gehäuseober- und der Gehäuseunterseite die Stabilität des Gehäuses sowie die Abstrahlcharakteristik des Transponders vorteilhaft beeinflusst werden.

Die Ausgestaltung des Gehäuses mit entsprechenden Montagehilfen, wie Bohrungen, Schlitzen und formschlüssigen Flächen zum Kleben, ermöglicht eine leichte Montage auf beliebigen Objekte. Somit ist der Transponder für alle Montageflächen geeignet und kann auch im industriellen Umfeld zuverlässig eingesetzt werden.

### Ausführungsbeispiel

Ein Ausführungsbeispiel der Erfindung ist in der Zeichnung dargestellt und wird im folgenden näher erläutert. Es zeigen:
- Fig. 1: eine perspektivische Darstellung einer Transpondereinheit bestehend aus einem Gehäuseunterteil und einem Gehäuseoberteil,
- Fig. 2: eine perspektivische Innenansicht des Gehäuseoberteils.
- Fig. 3: eine perspektivische Darstellung einer Variante der Transpondereinheit, und
- Fig. 4: eine perspektivische Ansicht des Gehäuseunterteiles aus Fig. 3.

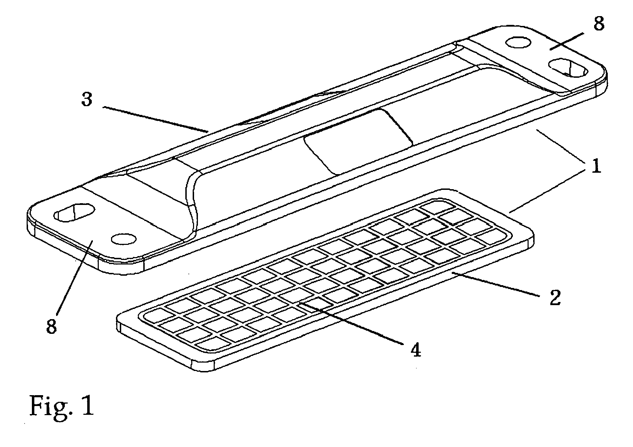

In Fig. 1 ist eine Transpondereinheit 1 mit einem Gehäuseunterteil 2 und einem Gehäuseoberteil 3 dargestellt. Das Gehäuseoberteil weist Montagehilfen 8 in Form von Bohrungen und/oder Schlitzen auf, die das Anbringen des Transponders auf beliebigen Objekten erleichtern.
Auf dem Gehäuseunterteil 2 ist eine Massefläche 4 vorgesehen, die aus sich kreuzenden Metallstreifen besteht, so dass ein Gitter gebildet wird. Die Massefläche kann jedoch auch flächig ausgebildet sein.
Als komplette Einheit wird das Gehäuseunterteil 2 in eine entsprechende ringförmige Ausnehmung 10 im Gehäuseoberteil 3 eingefügt, und vorzugsweise verschweißt, so dass eine übergangslose Fläche zwischen den seitlich abstehenden Flächen der Montagehilfen 8 und dem Gehäuseunterteil 2 entsteht.
Es besteht jedoch keine elektrisch leitende Verbindungen zwischen der Gehäuseoberseite und der Gehäuseunterseite.

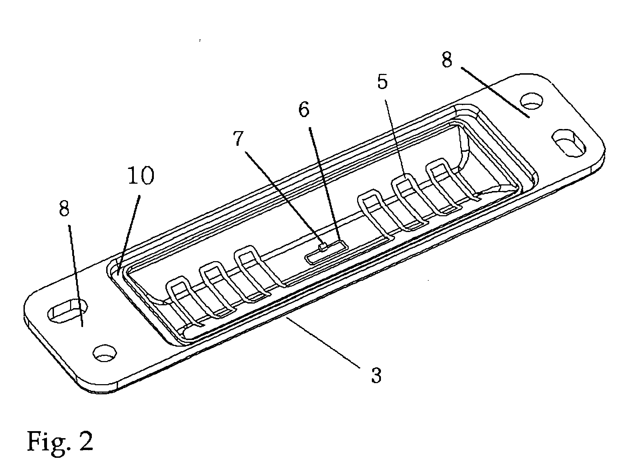

In der Fig. 2 ist in einer perspektivischen-Darstellung die Innenseite des Gehäuseoberteils 3 der Transpondereinheit 1 dargestellt.
Auf der nach außen gewölbten Innenseite bilden mäanderförmig ausgebildete metallische Streifen eine Antenne 5.
Dabei ist die Antenne kleberfrei direkt auf das Gehäuseoberteil aufgebracht, so dass Verformungen bei thermischer oder mechanischer Belastung deutlich reduziert sind und eine langzeitige Formstabilität gewährleistet ist.
Die metallischen Streifen der Antenne liegen nicht in einer Ebene, sondern sind an die Gehäuseform angepasst, so dass eine optimale Ausnutzung der verfügbaren Fläche und ein großer Spielraum für die Gestaltung und den Abgleich der Antenne besteht.
Der Transponder-IC 7 ist etwa mittig in der Gehäuseoberseite 3 angeordnet, wobei die Antenne 5 über eine mit dem IC 7 verbundene Koppelschleife 6 versorgt wird.

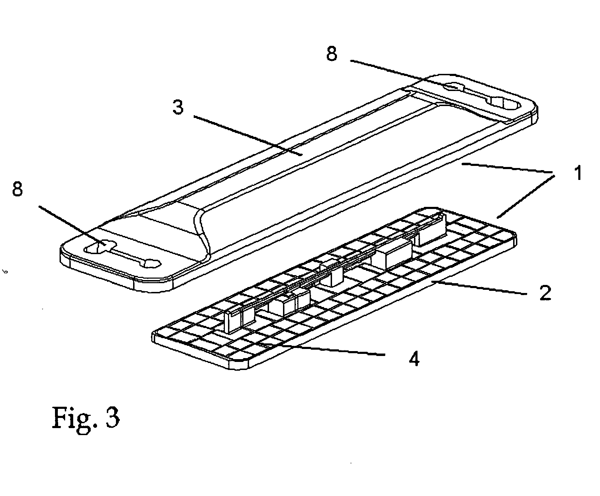

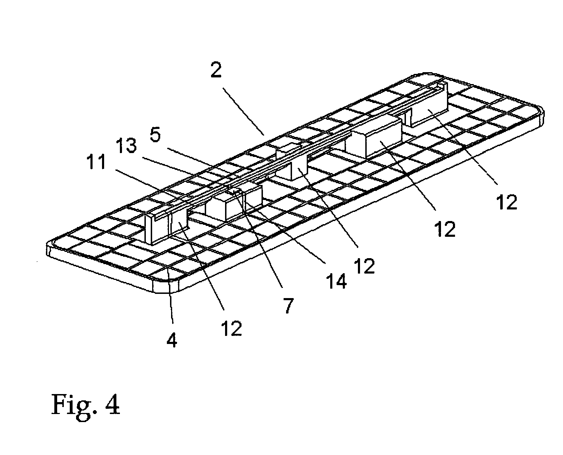

Die Fig. 3, 4 zeigen eine Variante der Transpondereinheit, wobei deren Bezugszeichen bei gleichen Elementen identisch denen der voran vorgestellten Version entsprechen.
In der Fig. 3 ist eine Transpondereinheit 1 mit einer Gehäuseunterteil 2 und einem Gehäuseoberteil 3 dargestellt. Das Gehäuseoberteil weist Montagehilfen 8 in Form von Bohrungen und/oder Schlitzen auf, die das Anbringen des Transponders auf beliebigen Objekten erleichert.

In der Fig. 4 ist in einer perspektivischen Darstellung das Gehäuseunterteil 2 der Transpondereinheit 1 dargestellt. Dabei ist auf dem Gehäuseunterteil mittels eines so genannten Abgussverfahrens ein Steg 11 mit mehreren Abstandselementen 12 angeordnet.
Auf dem Steg 11 ist ein eine Antenne 5 bildender metallischer Streifen aufgebracht. Das Gehäuseunterteil 2 weist eine gitterförmige Massefläche 4 auf, die aber auch als volle Fläche ausgebildet sein kann.
Auf einem der Abstandselemente 12 ist ein Transponder-IC 7 angeordnet, der einerseits mit der Antenne 5 und dem Leiterelement 13 und andererseits mit dem Leiterelement 14 und der Massefläche 4 verbunden ist.

### Bezugszeichenliste

### Transpondereinheit

- 1: Transpondereinheit
- 2: Gehäuseunterteil
- 3: Gehäuseoberteil
- 4: Massefläche, gitter flächig
- 5: Antenne, Metallstreifen
- 6: Koppelschlaufe
- 7: Transponder-IC
- 8: Montagehilfe
- 9:
- 10: Ausnehmung im Gehäuseoberteil, ringförmig
- 11: Steg
- 12: Abstandselement
- 13: Leiterelement, A
- 14: Leiterelement, M
- 15:

## Patentansprüche

1. Transponiereinheit (1) in einem hermetisch abgeschlossenen Gehäuse, bestehend aus einem Gehäuseoberteil (3) und einem Gehäuseunterteil (2), **dadurch gekennzeichnet,**
**dass** das Gehäuseunterteil (2) mit einer Massefläche (4) versehen ist, und
**dass** beabstandet von der Massefläche (4) eine Antenne (5) angeordnet ist.

2. Transpondereinheit nach Anspruch 1, **dadurch gekennzeichnet, dass** die Massefläche (4) flächig ausgebildet ist.

3. Transpondereinheit nach Anspruch 1, **dadurch gekennzeichnet, dass** die Massefläche (4) gitternetzartig ausgebildet ist.

4. Transpondereinheit nach Anspruch 1, **dadurch gekennzeichnet, dass** die Antenne (5) als metallischer Streifen entsprechend der Oberflächenstruktur im inneren des Gehäuseoberteiles (3) angeordnet ist.

5. Transpondereinheit nach Anspruch 1, **dadurch gekennzeichnet, dass** die Antenne (5) als metallischer Streifen auf einem beabstandeten Steg (11) auf dem Gehäuseunterteil (2) angeordnet ist.

6. Transpondereinheit nach Anspruch 1, **dadurch gekennzeichnet, dass** die Antenne (5) mäanderförmig ausgebildet ist.

7. Transpondereinheit nach Anspruch 1, **dadurch gekennzeichnet, dass** im Transponder-IC (7) gespeicherte Daten über eine Koppelschleife (6) auf die Antenne (5) übertragbar sind, wobei der Transponder-IC in unmittelbarer Nähe zur Antenne angeordnet ist.

8. Transpondereinheit nach Anspruch 1, **dadurch gekennzeichnet, dass** jeweils ein Leiterelement (13) von der Antenne (5) zum Transponder-IC (7) und ein Leiterelement (14) von der Massefläche (4) zum Transponder-IC (7) geführt ist.

9. Transpondereinheit nach Anspruch 1, **dadurch gekennzeichnet, dass** der Steg (11) für die Antenne (5) mittels Abstandselementen (12) auf dem Gehäuseunterteil (2) beabstandet ist.
